# EUROPEAN PATENT APPLICATION

(11) **EP 0 869 445 A2**
(43) Date of publication of application: **07.10.1998**
(21) Application number: 98105671.6
(22) Date of filing: 27.03.1998
(51) Int. Cl.: G06F 17/30, G11B 27/28

(54) **Video signal processing system and method using time code**

(30) Priority: 31.03.1997 JP 79585/97
(71) Applicant: Hitachi, Ltd., Chiyoda-ku, Tokyo 101-0062 (JP)
(72) Inventor: Miyatake, Takafumi, Hachioji-shi (JP); Nagasaka, Akio, Kokubunji-shi (JP)
(74) Representative: Strehl Schübel-Hopf & Partner

(57) **Abstract**

In a video signal processing system and method, a video signal having a plurality of frames each including image data (12A) and non-image data (12B) which contains frame address information specifying its associated frame is supplied to a processor (2) frame by frame time-serially. In the processor, time codes (14) are generated from the non-image data of the video signal and stored in combination with the frames detected by an event detection processing or in combination with an event code representative of an event. To detect a plurality of frames in real time, the video signal is distributed to a plurality of processors (2-1, 2-2, ..., 2-n), each processor independently executes a frame detection processing, and the results are combined on the basis of the time codes, so that a plurality of detected frames can be correctly arranged with respect to time.

## Description

### BACKGROUND OF THE INVENTION

The present invention relates to a video signal processing system and method for video indexing which is useful to support the user to edit and retrieve video data recorded on an electronic medium or video images in films and so on.

Recently, the speed and capacity of computers have been increased, and thus database systems and presentation tools under this background have attracted considerable attention because they can handle video information such as pictures in films and video data recorded on electronic media, which couldn't be treated in the past. It is troublesome for a user to look up only a necessary part from an enormous amount of video information and process it. Thus, as measures for reducing work burden by using a computer, there have been reported, for example, "Automatic Video Indexing and Full-Video Search for Object Appearances", The Transactions of The Information Processing Society of Japan, Vol.33, No.4, Apr. 1992, pp. 543-549; "Method of Detecting Cut Transitions in Motion Picture" in JP-A-4-111181 Laid-open on April 13, 1992; and "Method and Apparatus for Detecting Characteristic Scenes of Motion Pictures" in JP-A-9-65287 which was previously proposed by the inventors, and laid-open on Mar. 7, 1997. In these techniques, the video information is automatically divided into cut units or divided at special effect points such as dissolve, various kinds of events such as subject appearing intervals and caption displaying intervals are automatically detected, and the frames of the detected portion are listed as icons, thus supporting for the user to retrieve and edit motion pictures. According to these techniques, since the contents of the video information are listed on the screen so that all the constituents can be grasped at a glance, it is easy to look up a desired scene. In addition, since the video information can be exactly handled in cut units, it is easy to edit.

### SUMMARY OF THE INVENTION

However, the video information is formed of 30 frames per second. For continuous processing of a series of 30 frames per second, it is only possible with a currently available processing apparatus to perform one kind of video signal processing because of its processing speed. Under the present conditions, three methods can be considered for performing plural kinds of video signal processing.

In a first method, a single processor is used to receive a video signal as many times as the number of kinds video signal processing to perform individual video signal processing, wherein time codes for frame addresses at event appearing points are read through a standard serial port from an input source such as a video deck, and recorded. This method ensures correct recognition of a time relation between the processing results, but requires to receive a video signal a plurality of times, thus resulting in that it takes a long time to perform all of the required kinds of video signal processing, namely, it is impossible to perform plural kinds of video signal processing in real time.

In a second method, a single processor is used provided with extended boards each exclusive for an event so that they can be operated in parallel for respective functions by the conventional procedure. However, the boards exclusive for individual events have to be separately developed, which leads to high cost.

In a third method, a processor is provided for each kind of video signal processing, and a video signal distributor is provided to distribute a video signal to each processor so that different kinds of video signal processing are performed at a time. Thus, the processing time for all of the different kinds of processing is equal to the time corresponding to the length of the video signal. However, in order to accurately arrange the processing results in a correct time relation, it is necessary to precisely time all the processors, and to acquire information on actual time points and time codes for frames in a video signal under reproduction by a particular one of the processors through a standard serial port from the corresponding video deck and hold mutual relation between the time points and time codes. However, when the individual processors are realized by computers, it is difficult from the precision viewpoint to time a plurality of processors to an extent of frame unit (1/30 second) or field unit (1/60 second).

Thus, it may be considered that a time code is transmitted from a single video deck through a standard serial port to all processors. However, since the serial port usually follows a predetermined communication procedure, when a plurality of requests to read the time code are issued at one time, those requests must be treated sequentially. As a result, the waiting processors receive addresses out of the true time code at which the requests are issued. Thus, even in this method, it is difficult to precisely arrange processing results in a correct time relation.

Accordingly, it is an object of the invention to provide a video signal processing method/system capable of performing a plurality of different kinds of video signal processing in real time, in which frame addresses at event occurrence points are correctly recognized by each signal processing, so that time relations between the processing results can be easily correctly arranged.

According to one aspect of the invention, particular address information is attached to each of a plurality of frames included in an analog video signal. First, an analog video signal to be processed is supplied time-serially frame by frame to a processor through a video signal input port. In the processor, the image data of this video signal is recorded in a memory as a series of digital frame data, and the address information included in the non-image data of the video signal is digitized so that it can be converted into a plurality of time codes specifying one digital frame data associated therewith, and then it is recorded in a memory. Characteristic amounts of these digital frame data are calculated time-serially, and it is decided whether they satisfy retrieval conditions for detecting a frame data on which an event appears. If the conditions are satisfied, a record is produced which is a combination of a frame data or an event code representative of the event and a time code.

Therefore, it is possible to record correct addresses of the processed frames irrespective of how long time the processing takes or of how long time the video signals from a motion picture reproducing apparatus or tuner take to reach the video signal processing system.

In addition, according to another aspect of the invention, when a plurality of different kinds of video signal processing are performed in real time, a plurality of processors are provided, a video signal to be processed is distributed to the plurality of processors, and each of the processors independently executes its own processing. The processing results are arranged and combined by use of the time codes so as to have correct time relations.

Thus, even when a plurality of different kinds of video signal processing are performed by a plurality of processors, processing results will be those obtained with a single imaginary super-high speed processor. In addition, there will be no need, for the purpose correct recognition of time relation among the processing results, to provide a special signal line to which an external signal is applied, except the video signal input port. These processors may include general-purpose inexpensive computers.

### BRIEF DESCRIPTION OF THE DRAWINGS

Fig. 1A is a block diagram of a video signal processing system according to one embodiment of the invention.

Fig. 1B is a block diagram of a modified form of the system shown in Fig. 1A.

Fig. 2 is a schematic diagram showing a video signal to be processed on the system of Fig. 1.

Fig. 3 is a block diagram to which reference is made in explaining the function to detect frames which appear in a video signal and in which a plurality of characteristic events associated with retrieval conditions occur, in the embodiment of the invention.

Fig. 4 is an example of the list of detected events in a video signal.

Fig. 5 is a block diagram of a video signal processing system according to another embodiment of the invention, in which a plurality of processors are used.

Fig. 6 is a flowchart for controlling the system of Fig. 5.

Fig. 7 is a block diagram of a video signal processing system according to still another embodiment of the invention, in which a plurality of processors are used.

Fig. 8 is a block diagram showing an example of a structure of a time code generator which may be used in the embodiment shown in Fig. 7.

### DESCRIPTION OF THE PREFERRED EMBODIMENTS

Embodiments of the invention will be described in detail with reference to the accompanying drawings.

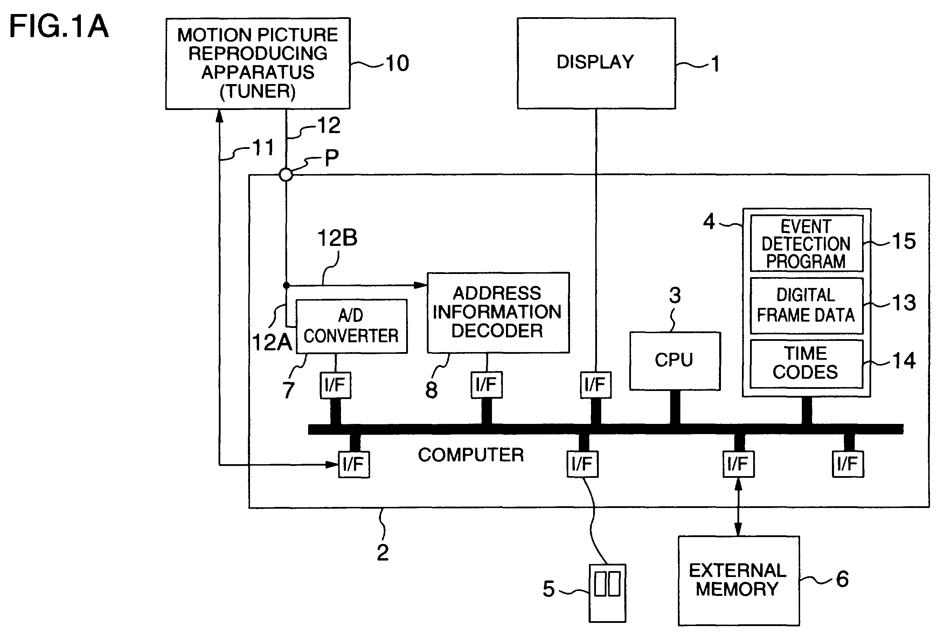

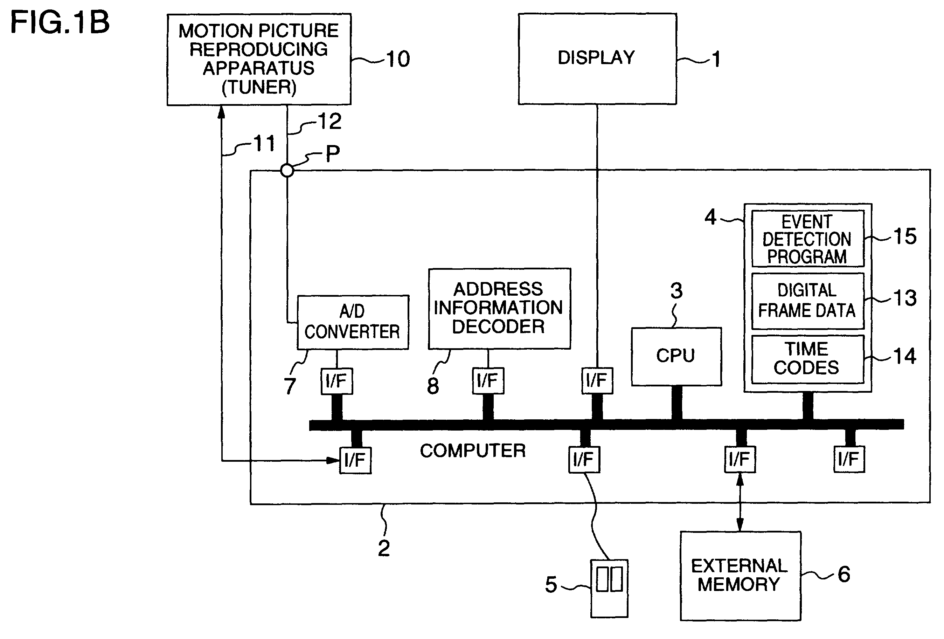

Fig. 1A is a block diagram of a video signal processing system according to one embodiment of the invention. Referring to Fig. 1, there are shown a display 1 such as CRT, and a processor 2 which includes, for example, a computer. The display 1 displays the output from the processor 2. The command to the computer 2 can be supplied through an input unit 5 such as a pointing device. A motion picture reproducing apparatus 10 may be a tuner for receiving ground wave broadcasts, satellite broadcasts, and cable television broadcasts, or apparatus for reproducing motion pictures recorded on an optical disk or video tape. An analog video signal 12 produced from the motion picture reproducing apparatus 10 is supplied through a video signal input port P to the computer 2. The video signal includes image data 12A and non-image data 12B. The latter non-image data 12B has, for example, closed caption information or video frame address information, which is superimposed upon the signal portion corresponding to particular scanning lines (for example, scanning lines in blanking periods), and recorded. The closed caption was developed for hearing-handicapped persons in the United States, and now this information is employed in most television broadcasts and commercially available video softwares. Also, address information for the Internet is superimposed on the non-image data of the video signal for broadcast called inter-text recently. In this embodiment, the image data 12A is converted into digital frame data (frame data) 13 by an A/D converter 7, and then fed through an interface to a memory 4 where it is stored. The frame data temporarily stored in the memory 4 amounts to, for example, those for 15 frames at most. The non-image data 12B of the video signal is processed by an address information decoder 8 so that the frame address information (hereinafter, simply referred to as a non-image portion when it is clear from the context) included in the non-image data 12B can be converted into a plurality of time codes 14 as digital data, and the time codes are stored in the memory 4. If necessary, it is also possible to read the scanning lines including the closed caption information, convert it into digital data and supply to the memory 4. In this case, the setting process for scanning lines to be read out is added. The digital frame data 13 recorded in the memory 4 are processed for an event detection by a CPU 3 according to an event detection program 15 stored in the memory 4. The event detection program has at least means for establishing retrieval conditions for detecting frame data on which an event appears, means for comparing each frame data and the retrieval conditions to determine whether the former matches the latter and data on an event code representative of the event. When a digital frame data is detected by the event detection process, the detected digital frame data or an event code representative of the event is combined with a time code 14 which is address information of the detected frame data, thereby to form a record. The record is stored in the memory 4 or, if necessary, in an external memory 6. The computer 2 can send a command through a control line 11 to the motion picture reproducing apparatus 10, to make the apparatus stop or perform a reproducing operation. The control line 11 is connected to the interface of a serial port in the computer.

In the computer 2 shown in Fig. 1A, the address information decoder 8 is an A/D converter. It may be (1) formed in a chip and built into the computer system at the time of its manufacture or may be (2) implemented on a printed circuit board which is inserted in an extended slot of a general-type computer such as personal computer (this is effective when the present invention is embodied on the existing personal computer). The address information decoder may be realized by employing, for example, the technique of decoder for reading the well-known closed caption. That is, data to be read out by the decoder for decoding the closed caption is not read from the scanning lines including the caption data of video signal, but from those including the frame address information. While the motion pictures (video signal) are supplied directly to the address information decoder 8 as shown in Fig. 1A, the analog motion picture signal may be once received by the processing system, and fed through an interface from the bus line to the decoder 8, as shown in Fig. 1B.

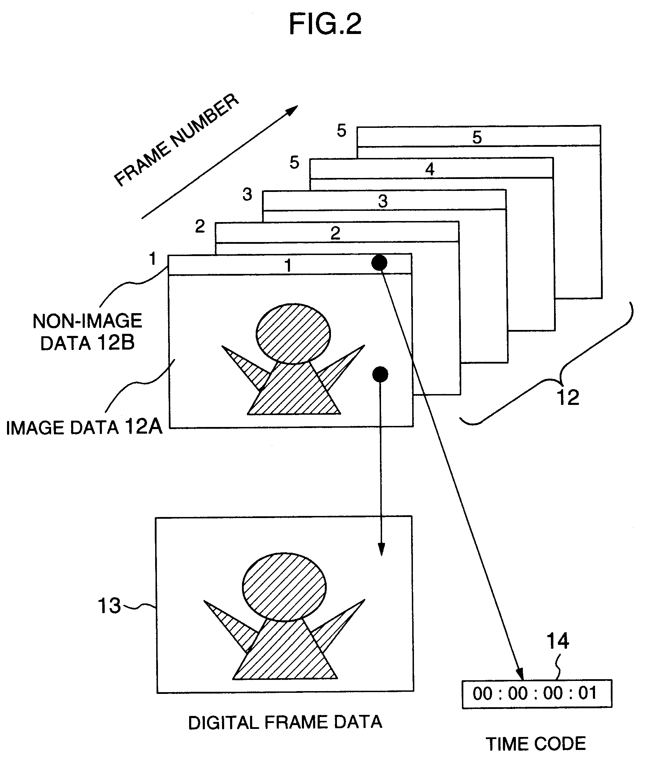

Fig. 2 specifically shows a structure of a video signal to be processed by the system of Figs. 1A and 1B. The video signal 12 includes a plurality of frames. According to the NTSC standard in the United States, 30 frames are sent per second thereby to be visualized. Each frame includes the image data 12A being visualized, and the non-image data 12B for synchronization control and data transmission. The image data 12A is converted into the digital frame data 13 by the A/D converter 7. The frame address information included in the non-image data 12B is converted into the digital time codes 14 by the address information decoder 8.

In the conventional system in which the video information is supplied from the motion picture reproducing apparatus to a computer, the frames and the time codes associated therewith are separated from each other, and supplied through separate signal lines, respectively. Therefore, when the video processing was completed, the time codes to be obtained for the video signal were out of correct positions due to the influence of the delay in processing on the computer side. This time code deviation becomes fatal to broadcasting stations when video signals are edited.

On the other hand, according to the present invention, a video signal including the image data and non-image data is received by a processor through a video signal input port, and the digital frame data and time codes associated therewith are generated from the image data and non-image data of the received video signal, respectively. Therefore, even though a delay is caused in the video processing, the frame address obtained in association with a frame corresponds to that frame.

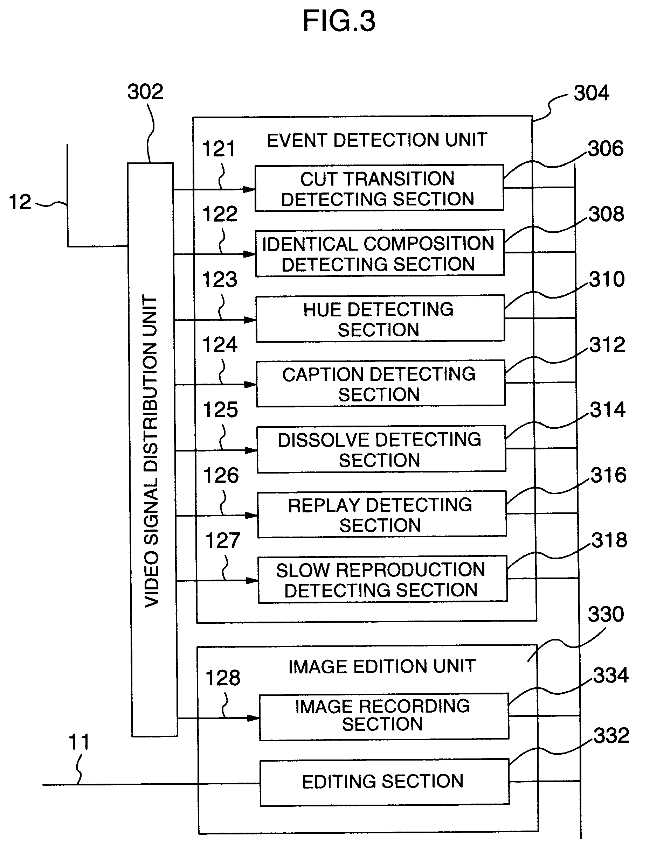

Fig. 3 is a block diagram to which reference is made in explaining the function of the video signal processing system for the purpose of supporting the video editing, or detecting the frame data corresponding to a plurality of events which appear in the video signal and which are featured by retrieval conditions. The events treated in this embodiment are, for example, transitions of cuts each consisting of a series of scenes, and caption attached to the sequentially fed frames, which appear in the video signal supplied from the motion picture reproducing apparatus. An event detection unit 304 shown in Fig. 3 has provided therein functions to detect a plurality of events (cut transition detecting section 306, identical composition detecting section 308, hue detecting section 310, caption detecting section 312, dissolve detecting section 314, replay detecting section 316, slow reproduction detecting section 318). The present invention is not limited to the kind and number of events (retrieval conditions). The input video signal 12 is supplied from the motion picture reproducing apparatus or tuner to a video signal distribution unit 302 on the basis of the command from an image edition unit 330. The video signal distribution unit 302 produces a plurality of video signals 121 to 128 of the same property, and supplies them to the event detection unit 304 and image edition unit 330. The video signal distribution unit 302 may have a known circuit arrangement. The detection sections of the event detection unit 304 generate digital frame data 13 and time codes 14 from video signals 121 to 128 and perform respective video signal processing (event detection) associated with various different events. When a frame data is detected in each detection unit, the detection unit provides the detected frame data with an event code representative of the event to be detected. The detected frame data or event codes appearing on the detected frame data are collected together with its time code to within the image edition unit 330, and then used for the editing operation in an editing section 332. Since the video signal processing results from the event detection unit 304 have time codes arranged in a correct time relation, the images after each processing can be managed together. The event code may be, for example, a binary code.

A detailed description will be made of a specific detection processing procedure in each block of the event detection unit 304 shown in Fig. 3.

The cut transition detecting section 306 detects the transition between cuts, combines the representative frame (frame data) or an event code representative of the cut transition (event) to be detected and a time code at that time to form a record, and records it in a storage region provided within or outside the cut transition detecting section 306. The place where it is recorded may be anywhere as long as the system can make access to the place. The cut transition may be detected by, for example, the method described in the above-mentioned JP-A-4-111181 entitled "Method of Detecting Cut Transitions in Motion Picture".

The identical composition detecting section 308 detects if a picture of the same composition or similar composition appears on a frame back to within a predetermined time. It may be detected by a picture comparing method typical in template matching. Specifically, this method takes the luminance difference or color difference between each two pixels at the same position on two frames being compared, and adds all the differences over the entire picture to form a difference index between the two frames. If this difference index is smaller than a certain threshold, the two frames can be decided to be identical or very similar. As a result, a record is stored which is a combination of a time code set consisting of the start time code and end time code of the successive pictures of the same composition, and a representative picture at that time or an event code representative of the composition (event) to be detected. The record may be stored anywhere as long as the system can make access to that just as the result from the cut transition detecting section 306 was stored.

The hue detecting section 310 detects if a picture of the same hue or similar hue appears on a frame back to within a certain time. To do this, for example, it can employ the color frequency distribution over the frame. This distribution is a characteristic amount which represents how much which color is used independently of the composition. Specifically, the colors of the pixels on each of two frames being compared are classed into about 64 colors, and the amount that each of those colors exists in each frame is counted. The absolute values of the differences are taken between the frequencies of the obtained frequency distributions of those colors on the two frames and added for those colors to form a hue difference index. If this difference index is smaller than a certain threshold, the two frames can be decided to be identical or very similar.

The result, or the same hue interval is recorded as a record which is a combination of a time code set consisting of the start time code and end time code and an event code representative of the hue (event) to be detected. It may be stored anywhere if the system can make access to it just as the result from the cut transition detecting section 306 was stored.

The caption detecting section 312 detects if a caption appears on a frame of the pictures. A specific detecting method may be, for example, the technique described in JP-A-7-192003 laid-open on July 28, 1995 and entitled "Motion Picture Retrieving System and Method". The result of the processing is recorded as a record which is a combination of a time code set consisting of the start time code and end time code and an event code representative of the caption (event) to be detected, or the interval in which the same caption occurs. It may be stored anywhere if the system can make access to it just as the result from the cut transition detecting section 306 was stored.

The dissolve detection unit 314 detects a special effect such as dissolve between the successive frames of a video signal. The detection method, specifically, may be, for example, the technique described in the above-mentioned JP-A-9-65287 by the inventors, and entitled "Method and Apparatus for Detecting Characteristic Scenes of Motion Pictures". The result of the process is recorded as a record which is a combination of the dissolve occurrence interval, i.e., a time code set consisting of the start time code and end time code and an event code representative of the dissolve (event) to be detected. It may be stored anywhere if the whole system can make access to it just as the result from the cut transition detecting section 306 was stored.

The replay detecting section 316 detects if exactly the same frame appears on frames back to within a certain time. This detection can be made by comparing frames using template matching just as in the identical composition detecting section 308. However, since it takes a long time when template matching is made for each frame being compared with another, each frame is converted into a code of about several letters, and a series of those codes is collated to compare a motion picture. Although the code itself corresponding to one frame has a very small amount of information, one motion picture which is composed of many frames includes a large number of codes. The sequence of codes in a motion picture has enough amount of information to specify a motion picture. The method of collating motion pictures based on this idea is described in JP-A-7-114567 laid-open on May 2, 1995 and entitled "Video Retrieval Method and Apparatus". The result of the process is recorded as the interval in which the same video image exists, or as a record which is a combination of a label number, a time code set consisting of the start time code and end time code and an event code representative of the image (event) to be detected. The label number indicates a serial number given in the order of detection to each of different kinds of replay scenes contained in the video signal. It may be recorded anywhere if the system can make access to it just as the result from the cut transition detecting section 306 was stored.

The slow reproduction detecting section 318 detects frames of slow reproduction mode. In the slow reproduction mode, the frames are successively displayed at longer intervals than the standard reproduction mode (twice for 1/2 slow, and four times for 1/4 slow as long as the standard mode). Thus, in the slow reproduction mode, the image data into which video images are digitized by the A/D converter 7 has the feature that a plurality of exactly the same frames succeed (two frames for 1/2 slow reproduction, four frames for 1/4 slow reproduction). Therefore, in order to detect the slow reproduction mode, it is necessary that two successive frames be examined in their difference index by the template matching. In addition, the difference index is examined over a certain time. If the difference index repeats a large value and a small value in a particular period, those frames are decided to be for slow reproduction. For example, for 1/2 slow reproduction mode, since each two same frames succeeds, the difference index alternately repeats a large value and a small value. For 1/4 slow reproduction mode, the difference index repeats as a small value three times and a large value once. However, since two successive frames are similar even in a motion picture of not slow reproduction, it is necessary that the difference index be decided to be larger or smaller than a threshold that is specified to be a small value. The result of the process is recorded as a record which is a combination of the slow-reproduction interval information, i.e., a time code set consisting of the start time code and end time code and an event code representative of the frame (event) to be detected. It may be recorded anywhere if the system can make access to it just as the result from the cut transition detecting section 306 was stored.

Each detection processing in the event detection unit 304 has been described above in detail. In addition, it has been mentioned for each detection section that the result of each process may be stored anywhere if the system can make access to it. When edition process is performed by use of the results of those processes in this embodiment, the results of those processes, in which video images are automatically separated in cut units, and separated at special effect points such as dissolve, and in which various events such as caption display intervals are automatically detected, are collected in the edition section 332. When the user actually makes edition process, the detected frames are listed on the screen as icons, and the intervals in which events exist in the video signal are displayed in a bar chart, thus supporting the user to make a video editing operation. Thus, since the contents of the compositions of the video images being edited are displayed as a list on the screen, the user can grasp the compositions of the video images at a glance, and thus easily find a desired scene. In addition, since the images can be treated in cut units (cut by cut), the user can edit with ease.

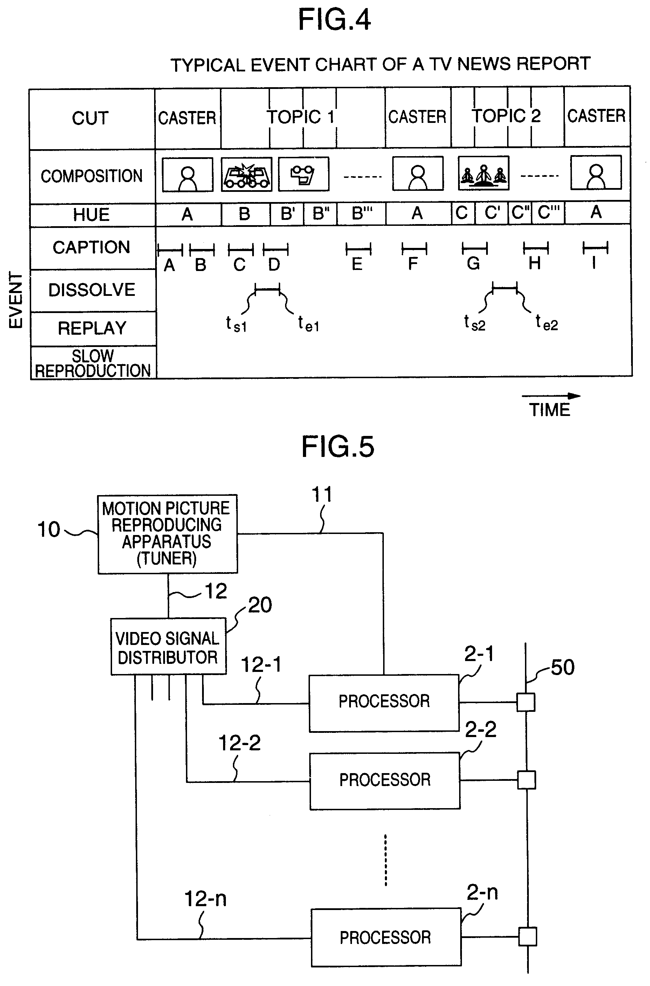

Fig. 4 shows an example of the results of event detection (video signal processing) which are collected in the edition section 332 and displayed as a list on the screen. The types of events, 1) cut transition, 2) composition, 3) hue, 4) caption, 5) dissolve, 6) replay and 7) slow reproduction are arranged on the ordinate with respect to time, or the abscissa so that the whole composition of the video images can be understood at a glance. Since the time codes specifying the detected frames are stored in combination with those frames or event codes representative of events appearing on the detected frames while a plurality of events are being detected in real time, the detected results (results of video signal processing) can be displayed together with the time codes on the time axis, and thus the frames can be managed and displayed in a correct time relation. In Fig. 4, examples of time points represented by start time codes and examples of time points represented by end time codes are shown by tₛ₁, tₛ₂ and tₑ₁ , tₑ₂ respectively.

When the user specifies the icon at a cut transition by the pointing device on the screen, the sequence of images corresponding to the time codes specified by the icon can be instantly and correctly looked up as to its beginning end from the video recording portion 3, and reproduced.

It will be clear that an ultra-speed video signal processing system is necessary in order to process, with a single processor, a video signal of 30 frames per second like the general television signal to thereby accurately detect events in real time. Fig. 5 shows an example of a system which has, as illustrated, a plurality of processors such as inexpensive personal computers. The motion picture reproducing apparatus 10 is the same as in Fig. 1, that is, a tuner for receiving television broadcast programs or a motion picture reproducing apparatus. A video signal distributor 20 has the same functions as the video signal distribution unit 302 shown in Fig. 3. This distributor 20 divides the input signal into a plurality of equivalent signals 12-1, 12-2, ..., 12-n, and produces them from the output end. Processors 2-1, 2-2, ..., 2-n correspond to the computer 2 shown in Fig. 1.

The processor 2-1 in Fig. 5 functions as a master processor. The master processor 2-1 controls the whole system shown in Fig. 5, and if necessary, performs video edition. Therefore, it also functions as the image edition unit 330. The processors 2-2 to 2-n perform respectively responsible event detection. These processors 2-2 to 2-n are slave processors which operate under the control of the master processor. The assignment of events to be detected to the slave processors may be set in advance. When a command to reproduce a motion picture is supplied from the master processor through the control line 11 to the motion picture reproducing apparatus 10, the motion picture reproducing apparatus 10 reproduces a video signal recorded on a medium such as video tape or receives a broadcast video signal, and supplies it to the video signal distributor 20. The reproduced video signal 12 is replicated by the video signal distributor 20 into n equivalent video signals 12-1 to 12-n, which are then fed to the processors 2-1 to 2-n, respectively. Each of the processors 2-1 has a structure similar to that of the computer 2, and therefore, has digital frame data and time codes stored in a memory. The processors 2-1 to 2-n read out the data stored in their memories and perform, with the read-out data, predetermined video signal processing (event detection and editing according instructions from the user) previously described with reference to Fig. 3. The event detection processing procedure in each processor 2-1 to 2-n, as described with reference to Fig. 3, is provided, for example, in the event detection program 15 stored in the memory 4 in Fig. 1. Thus, this event detection program 15 is read from the memory and executed by the CPU 3. While the event detection processes (306, 308, 310, 312, 314, 316, 318) shown in Fig. 3 are respectively assigned to the processors 2-2 to 2-n in this embodiment, it is possible that if the computer 2 is a high-performance computer capable of processing video signals of 30 frames per second or above, the plurality of event detection processes (video signal processing) are assigned to the single computer as long as the computer can satisfy the condition of real-time motion picture processing. The processors 2-2 to 2-n make their responsible event detection processes until an end command is issued from the master processor 2-1. When the end command is issued from the master processor 2-1, the processors 2-2 to 2-n stop their processing operations, and transfer the processing results (detected frames or event codes representative of events appearing on the detected frames) and the time codes specifying the detected frames which are read from the memory 4 (Fig. 1), to the master processor 2-1 through a network 50. The master processor 2-1 receives these results and time codes and edits the video signal. The system shown in Fig. 5 has also at least the same display and pointing device as in Fig. 1 provided for various different processes, though not shown.

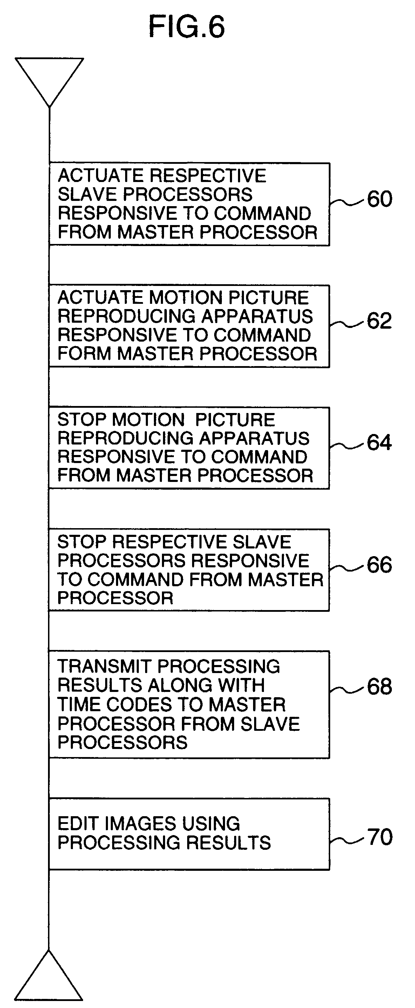

Fig. 6 is a flowchart for controlling the whole system of Fig. 5. First, at step, or box 60 a command is issued from the master processor 2-1, in order to order each slave processor 2-2, 2-3, ..., 2-n to execute the event detection program. At box 62, the master processor 2-1 orders the motion picture reproducing apparatus 10 to reproduce the video signal.

Under this condition, various events are detected on the respective processors 2-1 to 2-n. After the video signal is processed over a certain period of time, at box 64 the master processor 2-1 commands the motion picture reproducing apparatus 10 to stop the video signal reproduction. Then, at box 66 the master processor orders each slave processor 2-2 to 2-n to stop the event detection processing. At box 68 the results from the slave processors 2-2 to 2-n are transferred to the master processor 2-1 together with the time codes associated with the detected frames which are read from the memory 4. Finally, at box 70 the user edits images on the master processor 2-1 while the processing results are being displayed.

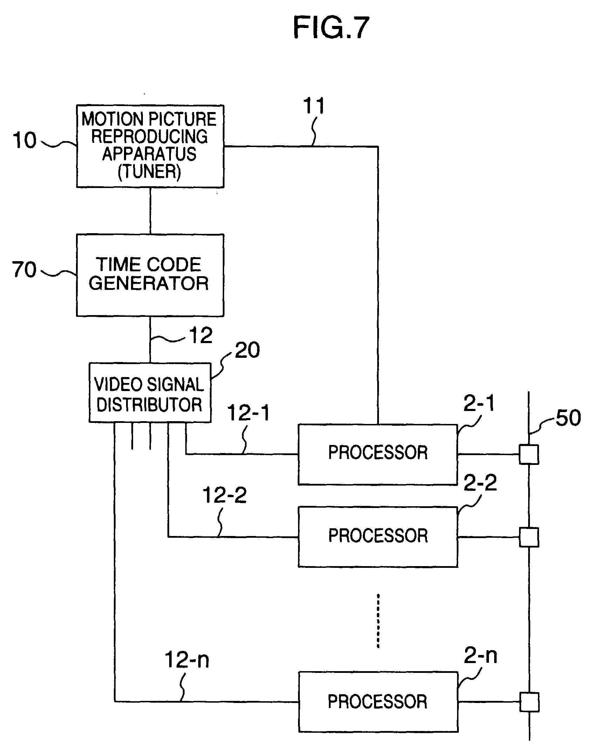

Fig. 7 is a block diagram of another embodiment of the system which employs a plurality of processors 2-1 to 2-n such as inexpensive personal computers as shown in Fig. 5.

There is a case in which the video signal from the motion picture reproducing apparatus 10 does not include any time codes, or even if time codes are included, its frame address may not be continuous (serial). In this case, a time code generator 70 is provided to generate frame address information, and add it to the video signal from the motion picture reproducing apparatus 10 as shown in Fig. 7. The video signal from the time code generator 70 is supplied to the video signal distributor 20. The other constructions and functions are the same as in Fig. 5. Thus, since the continuous frame address is added to the video signal, even the video signal with no frame number added and the video signal with discontinuous frame number added can be processed and the processing results can be combined by a plurality of processors.

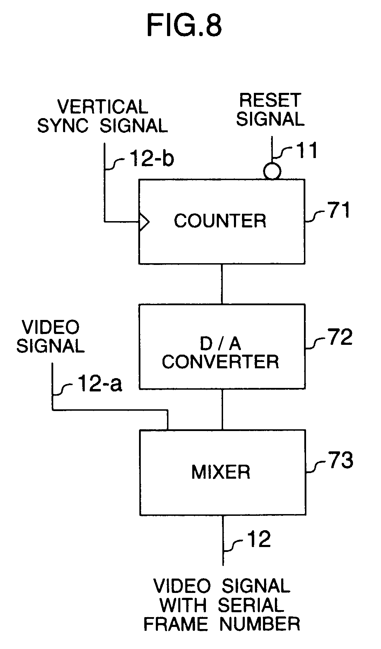

Fig. 8 shows an example of a structure of the time code generator which may be used in the embodiment shown in Fig. 7. The video signal 12 with frame address information added thereto is produced from a video signal 12-a and a vertical sync signal 12-b both obtained from the motion picture reproducing apparatus 10. The time code generator includes a counter 71 which counts the vertical sync signal or pulses generated therefrom and increments one by one. The count value of the counter is used as address information to be added to each individual frame. An output of the counter 71 is converted by a D/A converter 72 to an analog signal, which is supplied to a first input terminal of a mixer 73 having a second input terminal receiving the video signal 12-a. The mixer 73 adds the analog count signal from the converter 72 to lines for the non-image data of the video signal 12-a. The counter 72 may be reset by a reset signal 11 which is supplied once via the motion picture reproducing apparatus from the master processor when the processing system is started, or may be reset by a reset signal supplied thereto directly from the master processor.

According to the above-described embodiments, since the time code is generated directly from the non-image data included in the video signal fed through one input port, there is no problem that the actual image and the read time code are out of phase due to the delay of processing on the detecting processor side. In addition, since a plurality of detection processes can be separately executed by the plurality of processors, the individual processors can be reduced in their performance, and hence a scalable system can be produced at low cost.

## Claims

1. A system for processing a video signal having a plurality of frames each including an image data and a non-image data, the non-image data containing frame address information specifying its associated frame, the system comprising:
input means (10) from which the video signal is inputted frame by frame to the system time-serially;
a first A/D converter (7) for converting said image data (12A) of said video signal into a series of digital frame data;
a second A/D converter (8) for digitizing said address information included in said non-image data (12B) of said video signal to thereby convert said address information into a plurality of time codes;
a memory (4) for storing said series of digital frame data and said plurality of time codes;
means (15) for calculating a characteristic amount of each of said series of frame data and determining whether said characteristic amount satisfies retrieval conditions for detecting a frame data on which an event appears; and
means (3) for generating a record which is a combination of the frame data or an event code representative of an event appearing on the frame data and a time code specifying said frame data when said characteristic amount satisfies said retrieval conditions.

2. A system for processing a video signal having a plurality of frames each including an image data and a non-image data, the non-image data containing frame address information specifying its associated frame, the system comprising:
a plurality of processors (2-1, 2-2, 2-3, ..., 2-n); and
a distributor (20) for distributing the video signal, wherein each of said processors comprises:
input means (10) from which said distributed video signal is inputted frame by frame to the system time-serially;
a first A/D converter (7) for converting said image data (12A) of said video signal into a series of digital frame data;
a second A/D converter (8) for digitizing said address information included in said non-image data (12B) of said video signal to thereby convert said address information into a plurality of time codes;
a memory (4) for storing said series of digital frame data and said plurality of time codes;
means (15) for calculating a characteristic amount of each of said series of frame data and determining whether said characteristic amount satisfies retrieval conditions for detecting a frame data on which an event appears; and
means (3) for generating a record which is a combination of the frame data or an event code representative of an event appearing on the frame data and a time code specifying said frame data when said characteristic amount satisfies said retrieval conditions, and wherein each of said processors calculates a different characteristic amount, and determines whether said characteristic amount satisfies said retrieval conditions, and one of said processors arranges said records generated by said other processors on the basis of said time codes with respect to time.

3. A system for processing a video signal having a plurality of frames each including an image data and a non-image data, the non-image data containing frame address information specifying its associated frame, the system comprising:
a time code generator (70) which receives the video signal and adds address information specifying respective frames to said non-image data of said video signal;
a plurality of processors (2-1, 2-2, 2-3, ..., 2-n);
a distributor (20) connected to said time code generator in order to receive said video signal with said address data information added and distribute said video signal to said plurality of processors, wherein each of said processors comprises:
input means (10) from which said video signal with said address information added is supplied frame by frame to the system time-serially;
a first A/D converter (7) for converting said image data (12A) of said video signal into a series of digital frame data;
a second A/D converter (8) for digitizing said address information included in said non-image data (12B) of said video signal to thereby convert said address information into a plurality of time codes;
a memory (4) for storing said series of digital frame data and said plurality of time codes;
means (15) for calculating a characteristic amount of each of said series of frame data and determining whether said characteristic amount satisfies retrieval conditions for detecting a frame data on which an event appears; and
means (3) for generating that a record which is a combination of the frame data or an event code representative of an event appearing on the frame data and a time code specifying said frame data when said characteristic amount satisfies said retrieval conditions, and wherein each of said processors calculates a different characteristic amount, and determines whether said characteristic amount satisfies associated retrieval conditions, and one of said processors arranges said records generated by said other processors on the basis of said time codes with respect to time.

4. A video signal processing system comprising:
means (7) for generating a series of digital frames from an analog motion picture signal including a plurality of frames;
means (8) for generating a time code attached to each frame of said series of frames from said analog motion picture signal;
a memory (4) for storing said series of digital frames, a process program for detecting, among said series of frames, a frame on which an event appears, said program containing data on an event code representative of an event, and said time code; and
control means (3) for reading out and executing said process program, and generating a record including a combination of said frame detected as a result of executing said process program or an event code representative of an event appearing on the detected frame and a time code specifying the detected frame.

5. A video signal processing system comprising:
means (7) for generating a series of digital frames from an analog motion picture signal including a plurality of frames;
means (8) for generating a time code attached to each frame of said series of frames from said analog motion picture signal;
a memory (4) for storing said series of digital frames, a process program for detecting, among said series of frames, a frame on which an event appears, said program containing data on an event code representative of an event and said time codes;
control means (3) for reading out and executing said process program, and generating a record including a combination of said frame detected as a result of executing said process program or an event code representative of an event appearing on the detected frame and a time codes specifying the detected frame; and
a display (1), whereby a time range in which said detected frame appears is displayed for a series of displayed frames.

6. An extended board with an address information reading function comprising:
a connector inserted in an extended slot of a personal computer and connected to the bus line of said personal computer; and
an address information decoder for reading out frame address information from a video signal fed through said connector, and producing said frame address information to the outside.

7. A system for processing a video signal having a plurality of frames each including an image data and a non-image data, the non-image data containing frame address information specifying its associated frame, the system comprising:
input means (10) from which the video signal is inputted frame by frame to the system time-serially;
memory means having a first memory region (13) for storing a series of digital frame data to which said image data (12A) of said video signal have been converted, a second memory region (14) for storing time codes obtained by digitizing said address information included in said non-image data (12B) of said video signal, a third memory region (15) for storing a process program including a procedure for obtaining a characteristic amount of each frame of said series of frame data, said program containing a data on an event code representative of an event, and a fourth memory region (6) for storing a record including a combination of a frame or an event code representative of an event appearing on the frame data and its associated time code specifying the frame data; and
control means (3) for reading out and executing said process program.

8. A system for processing a video signal having a plurality of frames each including an image data and a non-image data, the non-image data containing frame address information specifying its associated frame, the system comprising:
a plurality of processors (2-1, 2-2, ..., 2-n); and
a distributor (20) for distributing the video signal, wherein each of said processors comprises:
input means (10) from which the video signal is inputted frame by frame to the system time-serially;
memory means having a first memory region (13) for storing a series of digital data to which said image data (12A) of said video signal have been converted, a second memory region (14) for storing time codes obtained by digitizing said address information included in said non-image data of said video signal, a third memory region (15) for storing a process program including a procedure for obtaining a characteristic amount of each frame of said series of frame data, said program containing a data on an event code representative of an event, and a fourth memory region (6) for storing a record including a combination of a frame data or an event code representative of an event appearing on the frame data and its associated time code specifying the frame data; and
control means (3) for reading out and executing said process program, wherein each of said processors independently executes a different process program, and one of said processors combines the results obtained by executing said different process programs, on the basis of said time codes.

9. A method of processing a video signal having a plurality of frames each including image data and non-image data, the non-image data containing frame address information specifying its associated frame, the method comprising the steps of:
supplying the video signal to a processor frame by frame time-serially;
converting, in said processor, said image data (12A) of said video signal into a series of digital frame data, and storing said series of digital frame data in a memory;
digitizing said address information included in said non-image data (12B) of said video signal, and storing said digitized address information as time codes in said memory;
calculating, in said processor, a characteristic amount of each frame of said series of frame data;
determining, in said processor, whether said characteristic amount satisfies retrieval conditions for detecting a frame on which an event appears; and
if said characteristic amount of a frame satisfies said retrieval conditions, generating, in said processor, a record including a combination of the frame or an event code appearing on the frame and said time code specifying said frame.

10. A method according to claim 9, wherein said steps of calculating said characteristic amount and determining whether said characteristic amount satisfies said retrieval conditions include a step of detecting transitions between said series of frame data of said input video signal.

11. A video signal processing system comprising:
a video signal input port (P) through which an analog video signal is supplied, said analog video signal containing a series of analog image data and analog non-image data;
a first A/D converter (7) for converting said series of analog image data of said video signal, supplied through said video signal input port, to a series of digital frame data;
a second A/D converter (8) for converting said analog non-image data of said video signal, supplied through said video signal input port, to a plurality of time codes each specifying its associated one of said series of digital frame data;
a memory (4) for storing therein said series of frame data and their associated time codes;
means (15) for establishing retrieval conditions for detecting an event, said event being represented by an event code; and
means (3, 15) for detecting a digital frame data among said series of digital frame data in said memory satisfying said retrieval conditions and indicating a time code specifying the detected frame data and an event code representing the event appearing on the detected frame data.

12. A system according to claim 11, further comprising a time code generator (70) for attaching a time code to each of said series of analog image data as a part of said non-image data of said analog video signal.

13. A system according to claim 11, further comprising a motion picture reproducing apparatus (10) having an output terminal connected with said video signal input port for supplying said analog video signal.

14. A system according to claim 11, further comprising a tuner (10) having an output terminal connected with said video signal input port for supplying said analog video signal.

15. A video signal processing system comprising a plurality of processors (2-1, 2-2, ..., 2-n) each having a video signal input port (P), and a video signal distributing unit (20) for distributing an analog video signal to the video signal input port of each of said plurality of processors, said analog video signal containing a series of analog image data and analog non-image data, wherein
each of said processors includes
a first A/D converter (7) for converting said series of analog image data of said video signal, supplied through said video signal input port, to a series of digital frame data,
a second A/D converter (8) for converting said analog non-image data of said video signal, supplied through said video signal input port, to a plurality of time codes each specifying its associated one of said series of digital frame data,
a memory (4) for storing therein said series of frame data and there associated time codes,
means (15) for establishing retrieval conditions for detecting an event, said event being represented by an event code, and
means (3, 15) for detecting a digital frame data among said series of digital frame data in said memory satisfying said retrieval conditions and indicating a time code specifying the detected frame data and an event code representing the event appearing on the detected frame data;
each of said processors serves to establish and detect an event which is different from those of the other processors; and
one (2-1) of said processors serves to manage the remaining processors and collect detection results by the remaining processors.

16. A method of processing a video signal containing a series of analog image data and analog non-image data, the method comprising the steps of:
converting said series of analog image data of the video signal to a series of digital frame data;
converting said analog non-image data of said video signal to a plurality of time codes each specifying its associated one of said series of digital frame data;
storing said series of digital frame data and said plurality of time codes in a memory; and
detecting a digital frame data among said series of digital frame data in said memory satisfying retrieval conditions for detecting an event and indicating a time code specifying the detected frame data and an event code representative of an event appearing on the detected frame data.

17. A method according to claim 16, wherein said analog video signal containing a series of analog image data and analog non-image data is supplied through a video signal input port so that each of said time codes correctly specifies its associated one of said series of digital frame data.

18. A method according to claim 16, further comprising the steps of:
retrieving a frame by use of said event code and said time code; and
displaying said retrieved frame on a screen.
